# EUROPEAN PATENT APPLICATION

(11) **EP 1 117 049 A1**
(43) Date of publication of application: **18.07.2001**
(21) Application number: 00100211.2
(22) Date of filing: 14.01.2000
(51) Int. Cl.: G06F 17/30

(54) **Dynamic conversion of data**

(71) Applicant: Sun Microsystems, Inc., Palo Alto, California 94303-4900 (US)
(72) Inventor: Hofmann, Ralf, 22143 Hamburg (DE); Hönnig, Michael, 22143 Hamburg (DE)
(74) Representative: Frank, Veit Peter, Dipl.-Ing.

(57) **Abstract**

A method for generating an adapter for converting data from a first data format to a second data format, comprising the steps of:
a) selecting from an adapter library a first partial adapter for converting said data from said first data format to an intermediate data format,
b) selecting from said adapter library a second partial adapter for converting said data from said intermediate data format to said second data format, and
c) combining said first partial adapter and said second partial adapter to generate said adapter for converting said data from said first data format to said second data format.

## Description

The present invention relates to a method for dynamically converting data having a first data format into data having another data format. In particular, the present invention concerns a method for rendering accessible data being stored on a first computer system in a first data format to a second computer system supporting a second data format.

Data is understood to be arrangements of information to be processed by a computer system. These arrangements of information is made in a certain data format. Each data format corresponds to a specific software module or groups of software modules which support the respective data format, that means which are able to handle and process data having the respective data format. Examples for data formats include the ASCII format and the txt-format, both being able to be processed by a group of text processing software modules, or the doc-format or the sdw-format, destined to be processed merely by a specific text processing software module.

Data may be stored on a storage medium, for example, a hard disc, a soft disc or a CD-ROM. If data, having a certain data format, shall be retrieved, that means opened for reading or amending, by a user, this user must have access to a computer system utilizing a software module which supports the data format of this data. In global business the number of situations grows where a user wants to access data being stored somewhere in a first data format from a computer system supporting other data formats than this first data format.

In the prior art converting programs are known which allow the conversion of data from one specific data format to another specific data format. However, each data conversion from one specific data format to another specific data format requires a separate converter. This means, a user who wants to be sure to be able to read data existing in a certain data format on computer systems supporting other data formats has to make sure that he has access to a substantial number of converting programs when required. Although many such converting programs are meanwhile available via the Internet at no or low cost it is nevertheless cumbersome to access these programs when they are needed.

It is, therefore, an object of the present invention to provide a method to access data having a certain data format regardless of this data format from a computer system which is initially not able to handle and process this data format.

This object is achieved by a method for generating an adapter for converting data from a first data format to a second data format, comprising the steps of:
a) selecting from an adapter library a first partial adapter for converting the data from the first data format to an intermediate data format,
b) selecting from the adapter library a second partial adapter for converting the data from the intermediate data format to the second data format, and
c) combining the first partial adapter and the second partial adapter to generate the adapter for converting the data from the first data format to the second data format.

In the first two steps of this method a first partial adapter and a second partial adapter are chosen from an adapter library, which is a collection of adapters on any suitable storage medium. Each of the partial adapters stored in the adapter library is able to convert data from a certain data format into a defined intermediate data format. In many instances partial adapters are also able to reconvert data from the intermediate data format into the above mentioned certain data format, that means they work bi-directional. This intermediate data format may be any data format. It is selected to provide a common basis for converting into and from. For example, the intermediate data format may be an extensible markup language (XML).

The first and second partial adapters are selected according to the concrete conversion requirements of the individual case, that means depending on the first and second data format involved. The selected partial adapters are combined to form the desired adapter for converting data from the first data format to the second data format. This combination is also called binding.

The combination, that means the binding, of the two partial adapters may be dynamic, that means the adapter will not be stored in the computer system carrying out the conversion of data. Instead, the two partial adapters may cooperate by exchanging information in the intermediate data format directly. Therefore, data to be converted from a first data format into a second data format need not exist at any time in a memory of the computer system carrying out the conversion in the form of a complete stream or file of data in the intermediate data format. However, pieces of the stream of file of data may, of course, exist in the intermediate data format at any given point in time.

In an embodiment of this method the adapter is generated in response to a command of a software program supporting the second data format to access the data being stored in the first data format. This means, the creation of the adapter may be on demand. This demand may be automatically posed by the software program or it may be posed only after user interaction with this software program.

In a further embodiment of the inventive method for generating an adapter the second data format may be selected from at least two data formats supported by the mentioned software program. The information about the supported data formats may be given by the software program to the decision device which selects the second data format. This decision device may be implemented in hardware or software and may be located on the first or the second computer system or at any location being accessible to the first or the second computer system. This information about the supported data format may be given directly. However, it may also be given indirectly in that the software program communicates to the decision device its type or nature and the decision device retrieves the information about supported data formats from a data base or any memory in which this information is present in relation to the obtained information about type or nature of the software program. For example, if it is known to the decision device that a certain text processing software program supports a certain data format, it may be sufficient to provide this decision device with the name of the text processing software program in order to give it, indirectly, the required information about the supported data format.

If more than one data format is supported by the software program requesting access to data being stored in a non-supported data format, the selection of the second data format into which the requested data shall be converted may be based on a selection scheme. This may use, as an example, one or more of the following criteria: storage space required by the data in each of the data formats supported by the software program, conversion time for the data from the first data format into each of the data formats supported by the software program. There may be other criteria furthering the aim of providing quick and easy access with a good quality to data stored in a computer system.

In the scope of the present invention there is also provided a method of using an adapter generated as described above for converting data from a first data format into a second data format.

Further, a method for rendering accessible data stored in a first data format in a first computer system to a second computer system supporting a second data format is provided, which method comprises at least the following steps:
a) receiving in the first computer system a request from the second computer system for the data,
b) receiving in the first computer system information about at least one data format supported by the second computer system,
c) selecting the second data format, if in step b) the first computer system was informed about more than one data format supported by the second computer system,
d) comparing in the first computer system the first data format with the second data format,
e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,
f) converting the data in the first computer system by means of the generated adapter from the first data format into the second data format,
g) transmitting the converted data from the first computer system to the second computer system.

The data which shall be accessed is stored in a first data format on a storage medium of the first computer system. This storage medium may be any type of memory, including a hard disk, a soft disk, a tape or a CD-ROM. The first computer system is a computer system which has access or is able to set up access to this storage medium, for example, via a permanent or an intermediate network or data channel. In this context a data channel is understood to be any real or virtual connection for the transfer of data. This first computer system comprises, besides the storage medium, at least a processor for converting data, if necessary, from one data format to another data format. The further structure and the location of this first computer system is not pertinent to the present invention. The first computer system may comprise a server with large-scale storage capacity for data and with high-rate data transfer options for data not immediately accessible within the first computer system.

The second computer system may be any computer system suitable for processing data, that means for at least retrieving, i.e. opening for reading or changing data. The second computer system must be connectable to the first computer system for the transmission of data. This connection can be achieved by any suitable data channel, including permanent and temporary data channels, like any kind of real or virtual network. In one example, the first and the second computer system may be of comparable size and have comparable tasks in this network, in another example, they may have the tasks of a server and a client, respectively. However, it may also be sufficient to employ removable data carriers, which will be physically exchanged between the first computer system and the second computer system, as the data connection. It is even possible that the first computer system and the second computer system are fully integrated parts of a complete computer solution. They may even employ the same processor and the same storage medium, so that they may as well be considered to be the same computer.

The second computer system may support one or several data formats, which may or may not be identical with the first data format in which the data- which shall be accessed by or via the second computer system - stored on the first computer system.

In the first step, the second computer system may request from the first computer system the data to be accessed by sending a corresponding request message to the first computer system. This request message may be sent by any suitable means, including via the data connection which is provided for exchanging data between the first and the second computer system.

Then, the first computer system is informed about at least one data format which is supported by the second computer system. This information may come from any source. For example, the second computer system may send this information, for example, together with the above described request for the data. However, this information may as well be present in the first computer system or any computer or storage system accessible for the first computer system, before the second computer system requests the data from the first computer system. In this case, the first computer system may retrieve or obtain the relevant information itself or by any suitable function, as soon as the second computer system requests the data.

The second computer system may support, as described earlier, one or more data formats. If a plurality of data formats is supported by the second computer system, the first computer system may be informed about only one or several selected or all of these compatible data formats, depending on the aim of the second computer system, or its programmer or user, respectively, as to which data format shall be requested or accepted. For example, the second computer system may work according to the scheme that a certain data format shall be preferred, and only in case this data format is not available, with or without conversion, then some other data format shall be accepted, that means may be requested from a first computer system, for example, a central server unit. The decision about a preferred data format may be carried out in the second computer system according to suitable criteria, for example, the criteria described below.

The information of the first computer system about any data formats supported by the second computer system may be effected indirectly, in that the first computer system merely receives information about a software module on the second computer system for which or by which the data is requested from the first computer system. In this case, the first computer system must have access to information as to which data formats are supported by this software module. This information may be stored in the first computer system, but it may be stored as well outside in a form which is accessible to the first computer system.

In the next step, the first computer system may select the second data format into which the requested data shall be converted, if the need to do so arises. This step only has to be carried out, if the first computer system was informed about more than one data format supported by the second computer system. This selection may be made arbitrarily, as well as according to any suitable criteria, for example the following: storage space required by the data in each of the data formats supported by the second computer system, transmission time from the first computer system to the second computer system for the data in each of the data formats supported by the second computer system, conversion time for the data from the first data format into each of the data formats supported by the second computer system. Other criteria may be more business-oriented, for example, the support of certain, may be own, data formats or may consider the quality of the conversion.

After having been informed about or having selected, respectively, the second data format, the first computer system compares the first data format, in which the requested data is presently stored on the first computer system, with the second data format in which the data format shall be forwarded to the second computer system. If these data formats are not compatible, the first computer system decides to convert the requested data from the first into the second data format.

For this conversion the first computer system generates an adapter for converting the required data from the first data format into the second data format, as it was described above.

The advantage of the present invention is, that the partial adapter library comprises only adapters from certain data formats to a convenient intermediate data format and vice versa, but not each and every cross-connection from any first to any second data format required by prior art solutions. If a new data format should be supported by the prior art solution, as many conversion adapters have to be provided as data formats exist. According to the present invention, however, only two new adapters have to be added to the existing library, one for converting the new data format into the intermediate format, another for converting the intermediate format into the new data format.

The generated adapter generally works as one adapter, that means there will be no intermediate data in the intermediate data format. However, specific reasons may exist to store such an intermediate data in a storage of the first computer system. A reason for such a solution may be insufficient buffer space in the conversion processor, or, considering the situation from the point of view of the data to be converted, this data may be too long to be converted in one step.

The standard intermediate data format may be an extensible markup language, generally designated with the letters XML. It will be understood that the invention is not limited to the present definition of a XML standard language.

After applying the generated adapter, the first computer system transmits the converted data to the second computer system via any kind of data connection. Herewith, the user of the second computer system is able to access the desired data in the required data format without the need to have a variety of converter programs at hand.

In the further course of action the generated adapter may be maintained and stored in the first computer system or any storage system related to this first computer system. However, it may be advantageous, with respect to storage management, to abandon the generated adapter and newly create it if a similar conversion task arises.

In the scope of the present invention a method is also provided for rendering accessible data stored in a first data format in a first computer system to a second computer system supporting a second data format, comprising the steps of:
a) receiving in said first computer system a request from said second computer system for said data,
b) informing said second computer system about said first data format of said requested data,
c) selecting said second data format, if said second computer system supports more than one data format,
d) comparing said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data by means of said generated adapter from said first data format into said second data format,
g) accessing said converted data by said second computer system.

Herein, the second computer system chooses among several supported data formats the second data format into which the data being present in the first data format shall be converted. The information about the first data format in which the requested data are stored may be provided by the first computer system, but it may also come from every other source connected to the second computer system. The comparison step between the first data format and the selected second data format may be carried out in the first or the second computer system or on any other computer system being accessible either the first or the second computer system.

Further, a method for rendering accessible data stored in a first data format in a first computer system to a second computer system supporting a second data format is provided, which method comprises at least the following steps:
a) receiving in the first computer system a request from the second computer system for the data,
b) transmitting the requested data from the first computer system to the second computer system,
c) so that the second computer system is able to select the second data format, if it supports more than one data format,
d) wherein the second computer system is able to compare the first data format with the second data format,
e) wherein the second computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,
f) wherein the second computer system is able to convert the data by means of the generated adapter from the first data format into the second data format.

In the scope of the present invention, the steps of selecting, comparing, generating and converting may be carried out by the first computer system or by the second computer system. It may be also possible that these two computer systems cooperate by carrying out some of the steps in one computer system and some other steps in the other computer system.

In the scope of the present invention there is also provided a method for using a second computer system supporting a second data format for accessing data being stored in a first data format on a first computer system, comprising the following steps:
a) requesting from the first computer system the data,
b) informing the first computer system about at least one data format supported by the second computer system,
c) so that the first computer system is able to select the second data format, if it was informed about more than one data format supported by the second computer system,
d) wherein the first computer system is able to compare the first data format with the second data format,
e) wherein the first computer system is able to generate an adapter for converting the data from the first data format into the second data format, if the first data format is incompatible with the second data format, by operatively connecting a first partial adapter for the transformation of data from the first data format to an intermediate data format and a second partial adapter for the transformation of data from the intermediate data format to the second data format,
f) wherein the first computer system is able to convert the data by means of the generated adapter from the first data format into the second data format,
g) receiving the converted data from the first computer system in the second computer system.

The last described method for using a second computer system requires a second computer system which is able to process data, but which may be very limited in its functionalities. For example, the second computer system may be a thin client which cooperates, as described, with a large server forming the first computer system. With this method of use the second computer system may be used in a particularly advantageous way.

In the scope of the present invention there is also provided a method for using a second computer system supporting a second data format for accessing data being stored in a first data format on a first computer system, comprising the following steps:
a) requesting from the first computer system the data,
b) receiving the requested data from the first computer system in the second computer system,
c) selecting the second data format, if the second computer system supports more than one data format,
d) comparing in the second computer system the first data format with the second data format,
e) generating an adapter for converting the data from the first data format into the second data format, if the first data format is incompatible with the second data format, by combining a first partial adapter for the transformation of data from the first data format to an intermediate data format and a second partial adapter for the transformation of data from the intermediate data format to the second data format,
f) converting the data in the second computer system by means of the generated adapter from the first data format into the second data format.

The present invention may provide also a method employing an adapter generated by more than two partial adapters. Herein, at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format. The number of further partial adapters may be very high and depends on the specific implementation requirements for the inventive method.

The method of the present invention may be implemented in a computer program (computer program product), including comprehensive office applications. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such a computer program may be stored on any common data carrier like, for example, a floppy disk or a compact disk (CD), as well as on any common computer system's storage facilities, like hard disks. Therefore, the present invention also relates to a data carrier for storing a computer program for carrying out the inventive method. The present invention also relates to a method for using a standard computer system for carrying out the present inventive method.

Furthermore, stored data structures are provided, comprising a set of partial adapters, wherein each partial adapter of the set of partial adapters is capable of converting data between a certain data format and an intermediate data format. Therein, each partial adapter being capable of converting data between a first data format and the intermediate data format may be combined with each other partial adapter being capable of converting data between a second data format and the intermediate data format in order to produce an adapter being capable of converting data between the first data format and the second data format.

The present invention is exemplary shown in Figs. 1 to 9, wherein these figures show the following:
- Fig. 1:: schematic diagram of a hardware system for applying the inventive method
- Fig. 2:: flow chart representing the method for rendering accessible data stored in a first data format in a first computer system to a second computer system supporting a second data format according to the present invention
- Fig. 3:: flow chart representing the generation of an adapter for converting data from a first data format into a second data format according to the present invention
- Fig. 4:: flow chart representing the conversion of data from a first data format to a second data format using an adapter generated with a method according to the present invention
- Fig. 5:: schematic diagram of a client-server system for carrying out the method steps shown in Fig. 3 and Fig. 4
- Fig. 6:: flow chart representing the steps of the method according to the present invention by employing two computer systems
- Fig. 7:: flow chart representing the steps of the method according to the present invention by employing one computer system
- Fig. 8:: flow chart representing the generation of the adapter
- Fig. 9:: schematic diagram of examples of combinations of partial adapters

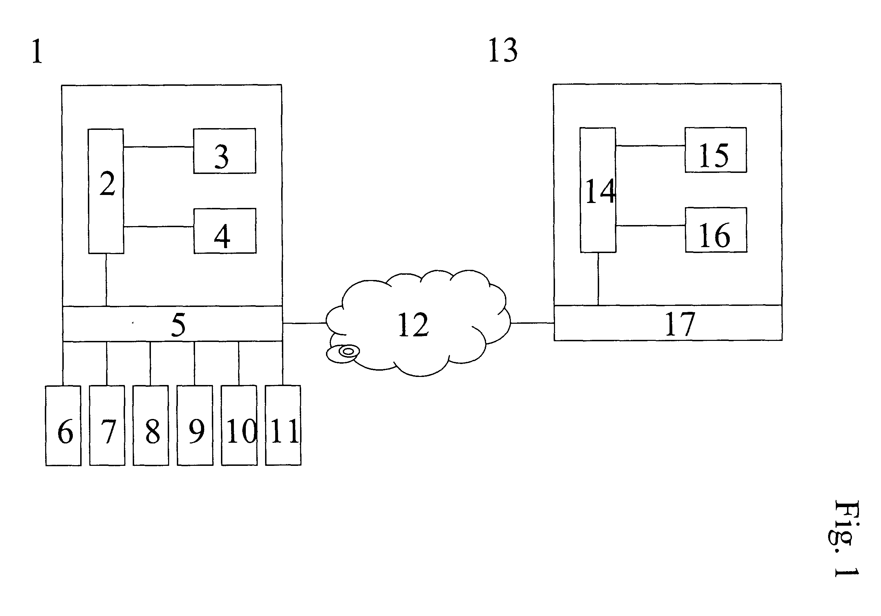

Fig. 1 shows an example for a second computer system 1 suitable to be used in the scope of the present invention. This second computer system 1 comprises a processor 2, memories 3, 4 and an i/o interface 5. The memory of the second computer system 1 is divided in this example into a volatile memory 3, like a working memory, and a non-volatile memory 4, like a hard disk. Via the i/o interface 5 the second computer system 1 may, for example, be connected with input/output devices 6 to 11. Common input/output devices are a keyboard 6, a monitor 7 and a printer 8. Other input devices like a mouse 9, a scanner 10 and a CD-ROM 11 are also possible. Frequently, the second computer system 1 is also connected to a network 12 via this i/o interface 5. A first computer system 13 may be connected to the second computer system 1 via this network 12. This first computer system 13 may comprise as well a processor 14, memories 15, 16 and an i/o interface 17.

The method according to the present invention may be employed, for example, for enabling a user to access his data by means of different computer systems. A user may store, for example, an address-list as a part of a schedule program via his second computer system 1, in this example a standard personal computer in his office, on a first computer system 13, in this example a central server. The corresponding data may be stored in a first data format which is specific for the employed schedule program.

In the following example, the user wants to access this address list via another second computer system 1, for example a standard personal computer in the office of a customer. It is understood that the method according to the present invention is not limited to standard personal computers. Any other computer systems like, for example, laptops, handheld computers and mobile phones can also be employed as second computer systems 1. In the case that the actually used second computer system 1 may not comprise the specific schedule program, prior art systems would have difficulty in providing the user access to the address-list. However, if the method according to the present invention is applied the user will get easy access to the address-list, although the actually used second computer system 1 does not have the specific schedule program normally required to access the address list.

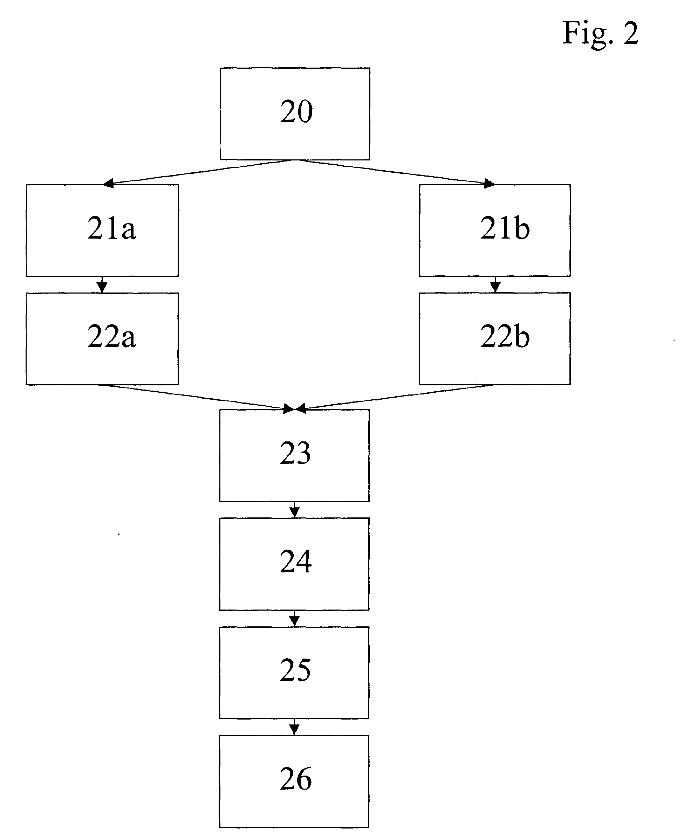

The flow chart in Fig. 2 represents the steps of the present example. In a first step 20 the user may contact the first computer system 13 in order to open the specific address list. The first computer system 13 and the second computer system 1 will start a communication in order to select a data format for the requested data. This may take place, for example, by two different ways:

If the second computer system I knows that the requested data is formatted in a certain first data format the method will carry out the step 21a in Fig. 2. In this step the second computer system 1 will inspect the software programs which are available to the second computer system 1 in order to find software programs which support the first data format of the requested data or a compatible data format. Thereafter, the second computer system 1 will inform the first computer system 13 whether the second computer system 1 is able to open the requested data in the first data format, or if the first computer system 13 may have to convert the data from the first data format into a second data format supported by the second computer system 1. If the second computer system 1 has no access to a software program which supports the first data format of the requested data, the second computer system 1 will inform in step 22a the first computer system 13 about one or more second data formats supported by it. Based on this additional information the first computer system 13 may provide the requested data directly to the second computer system 1 - if the second computer system 1 supports the first data format - or the first computer system 13 may first convert the requested data in a second data format - if the second computer system 1 does not support the first data format -, as will be described below.

If the second computer system 1 does not know the first data format of the requested data, the first computer system 13 has to decide whether the requested data may have to be converted or not. In order to find out which data formats are supported by the second computer system 1 the first computer system 13 may start a function for searching the software programs available to the second computer system 1, represented by step 21b in Fig. 2. The result of this search function may be the information about software programs available to the second computer system 1 or the supported data formats, respectively. The result of this search function may be evaluated in step 22b in the first computer system 13 and based on this result the first computer system 13 may convert the requested data in the second data format.

In order to convert the requested data in the second data format the first computer system 13 will generate dynamically an adapter for converting data from the first data format into the second data format. According to the present invention such a converting step is carried out by employing an intermediate data format, especially an XML format.

The first computer system 13 may have access to a data base with adapters between the first and the second data format, respectively, and the standard data format, in this example a XML format. Such adapters allow to convert data from the first or second data format, respectively, into a XML format and also to convert data from a XML format into the first and second data format, respectively.

After the first computer system 13 has specified in step 22a or in step 22b the second data format the first computer system 13 may select in step 23 from the data base a first adapter which enables to convert data from the first data format into a XML format and a second adapter which enables to convert data from a XML format into the second data format. These two adapters may be combined in step 24 in a way that the data may be converted from the first data format into the second data format, without the existence of the data in the intermediate data format, a XML format in this example.

These adapters may be employed for the converting in step 25 of the requested data into the second data format. Thereafter, the converted data may be transmitted in step 26 to the second computer system 1 in order to open this data on the second computer system 1.

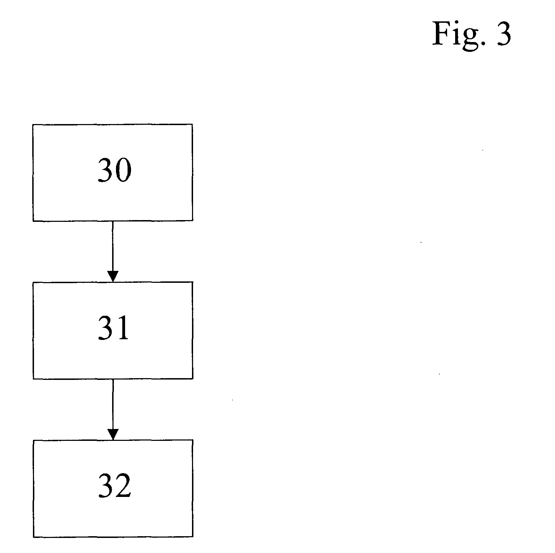

Fig. 3 shows in a flow chart the steps for generating an adapter for converting data being formated in a first data format into data being formated in a second data format.

In a first step 30 a first partial adapter is selected from an adapter library. The first partial adapter is a software module which is able to convert data from a first data format into the intermediate data format and vice versa. The first partial adapter may be bidirectional for conversion in two directions or unidirectional for conversion only in one direction. The selection of the first partial adapter requires information as to the first data format of the data. Furthermore, information will be required about the intermediate data format, if the intermediate data format is not yet determined for the inventive method. This information may be received and the selection carried out by a suitable software program.

In a second step 31 the second partial adapter is selected from the adapter library. The explanations given above for the selection of the first partial adapter apply here as well. The sequence of the selection of the first and the second partial adapter is not relevant to the present invention. It will be determined according to practical considerations.

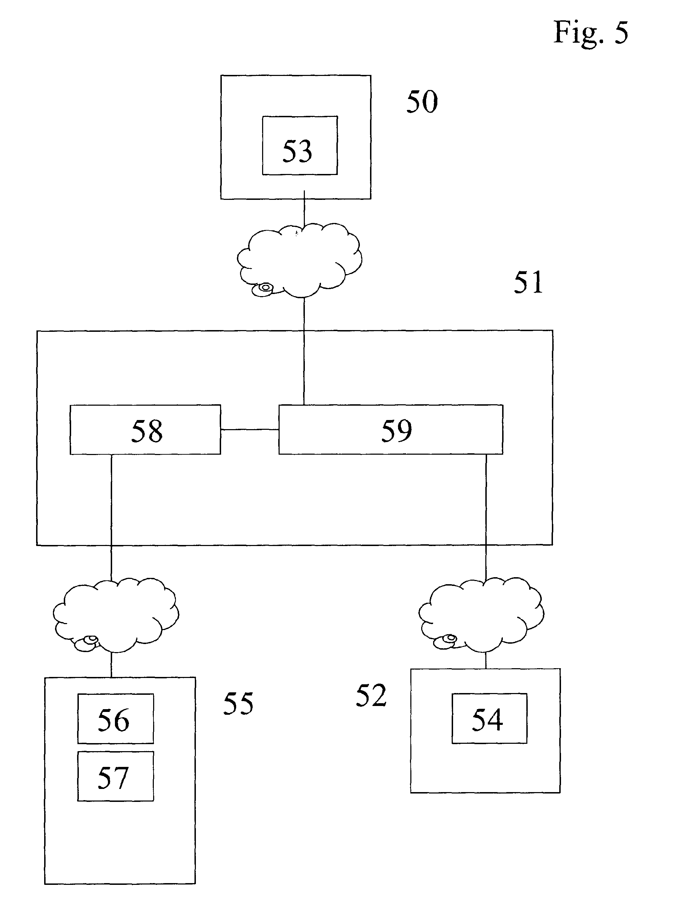

Finally, in a third step 32 the first partial adapter and the second partial adapter are combined, so that the desired adapter for converting data from a first data format into a second data format is generated. This combination may be achieved by a software program which is informed about the selected adapters and their address in a storage or memory medium. For example, the above described software program which carries out the selection of the first and the second partial adapter may also carry out their combination. Fig. 5, which will be described below, shows a possible mechanism of these selection and combination steps.

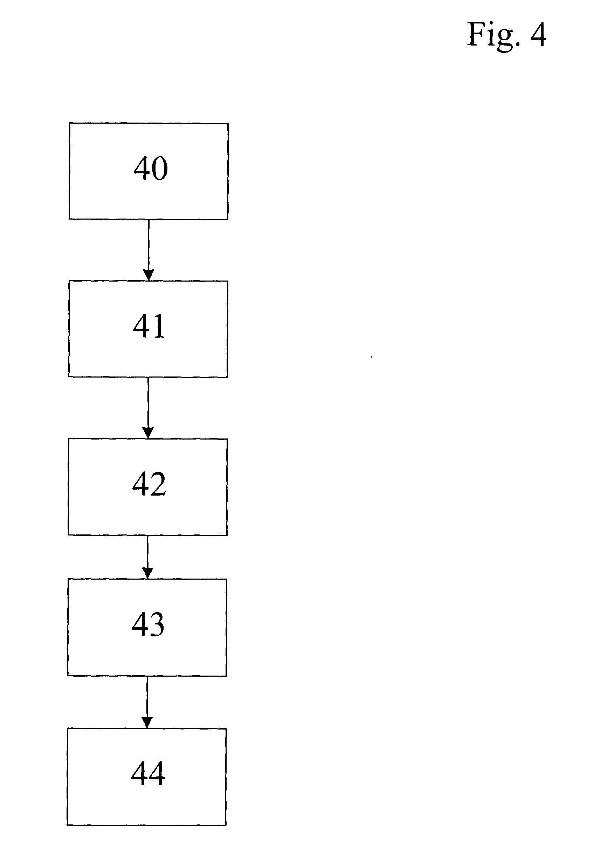

Fig. 4 exemplary shows in a flow chart the conversion of data from a first data format into a second data format, as it is carried out by the inventive method.

In a first step 40 the data in the first data format which shall be converted is loaded onto the computer system on which the conversion will be carried out. Loading of the data means to make it available for further processing by the adapter which will also be available on the computer system which converts the data. The loading may require the transfer of the data from another computer system or storage medium, for example, a data base separated from the computer system on which the conversion will be carried out, because the data to be converted need not be stored on this computer system. This transfer may be carried out via any suitable data channel, be it permanent or temporary.

In step 41 the data to be converted is read by the generated adapter as a whole or part by part. In step 42 the information contained in the data which is not relevant for the representation of the data in the second data format may be stripped and disregarded in the further process of conversion. Such information may, for example, by layout commands which are meaningful in the first data format, but are meaningless in the second data format. In step 43 the remaining content of the data, i.e. the non-stripped information, will be converted from the first data format into the second data format using the generated adapter. The adapter may be generated, as explained above, on the fly, that means it will be generated on demand and it need not be stored, unless a storage during the conversion of the data in the computer system is advantageous for some reason, for example, due to the size of the adapter in relation to the working memory of the computer system's processor.

Finally, in step 44 the converted data is stored in a storage medium accessible to the computer system which carried out the conversion of the data. Herewith, the data is accessible to users in the second data format.

The generation of an adapter and the conversion of data with the generated adapter according to the present invention, as they were described in Fig. 3 and Fig. 4 above, may be carried out on a client-server system as it is shown in Fig. 5.

Fig. 5 shows a client 50, for example, a laptop computer which has access, for example, via a real or virtual network, to a server 51 which has in turn access to a storage medium 52. A software program 53 runs on the client 50. This software program 53 desires access to data 54 which is stored on storage medium 52. The software program 53 supports a second data format, but not the first data format in which the data 54 is stored on the storage medium 52. Therefore, the software program 53 is not able to directly access the data 54 on the storage medium 52.

In order to render the data 54 accessible to the software program 53 the server 51 has access to an external data base 55 containing a library of partial adapters 56, 57, ... . A software program 58 on the server 51 is able to generate the adapter required for converting the data 54 from the first data format into the second data format. A further software program 59 on the server 51 serves for applying the generated adapter and thereby provides the converted data 54, which may then be returned to the client 50.

According to the present invention the software program 53 on the client 50 contacts the software program 59 on the server 51 in order to obtain access to the data 54 stored on the storage medium 52. The software program 59 may ask the software program 53 which has issued the request for access which data format it can or would like to support. It may further ask the storage medium 52 in which data format the data 54 is available. Having so determined the first data format - in which the data 54 is stored on storage medium 52 - and the second data format - which is supported or required by the software program 53 - the software program 59 may request from the software program 58 an adapter allowing the conversion of data from the first data format to the second data format. The software program 58 will, based on this information, contact the data base 55 and select the first partial adapter 56 - which is able to convert between the first data format and the intermediate data format - and a second partial adapter 57 - which is able to convert between the intermediate data format and the second data format - and combine both in order to generate the desired adapter. This adapter will then be provided for application from the software program 58 to the software program 59, where the conversion of the data 54 be effected. This conversion requires that the data 54 is transferred from the storage medium 52 to the software program 59 on the server 51. The converted data will then be sent to the software program 53 on the client 50.

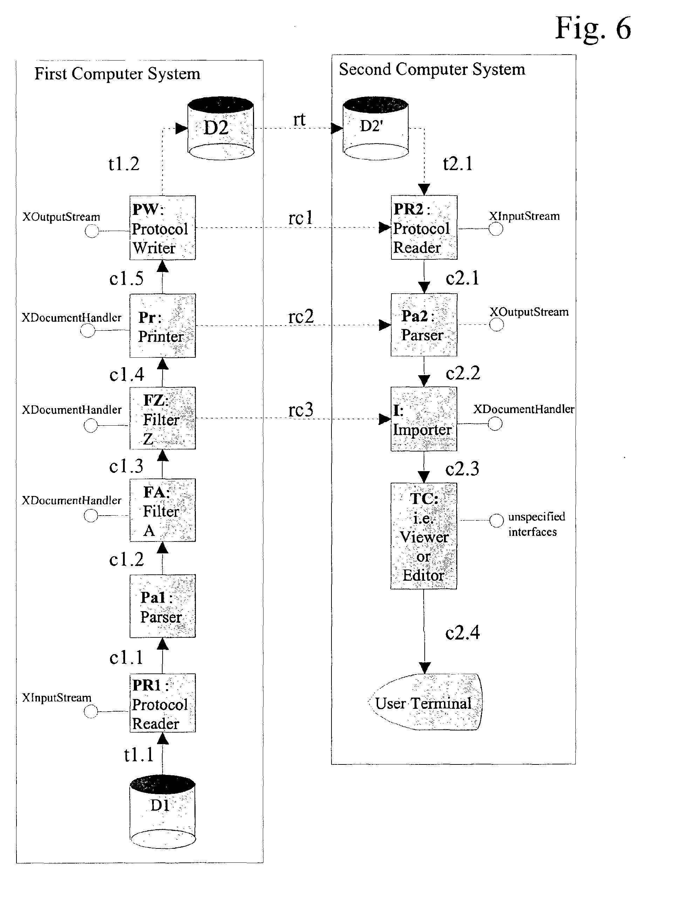

Examples for the implementation of the present invention are in the following described in more detail along Figures 6 to 8 and Table 1.

In Fig. 6 the data transfer and the data format filtering, that means the data conversion process employing a first and a second computer system is described.

Original source data is present in its source data format, above referred to as the first data format, on a first computer system. It shall be converted into a target data format, above referred to as the second data format, so that it is accessible by a second computer system which supports the second, but not the first data format. This conversion is effected via an intermediate data format. This process will be described in more detail in the following.

### D1: storage medium for original source data

The original source data are the data stored on the first computer system and to be accessed by the second computer system. Here, this data is stored on a storage medium D1 of the first computer system in the form of a data file. Alternatively, the data could be procured on demand via a network connection, for example, using special protocols like HTTP or FTP. The data could also be stored on a third computer system which is accessible for the first or the second computer system.

### t1.1: transfer of the original source data to the protocol reader PR1

In order to access the data file for further handling and processing the data file is transferred from the storage medium Dl of the first computer system to a protocol reader PR1, which may also be located on the first computer system.

### PR1: Protocol Reader 1

The protocol reader PR1 on the first computer system reads source data from an external representation of data, here the storage medium D1, into the first computer system. Specialized protocol readers for different protocols may exist, for example, for FILE, HTTP or FTP.

### c1.1: reading the original source data

An interface which allows reading the original source data is provided by the protocol reader PR1. This interface provides access to the requested data file, that means to the original source data. An example for such interface is XinputStream.

The XinputStream is an interface for sequentially reading data from a data source. Such an interface has at least a method to read data, for example, the following:

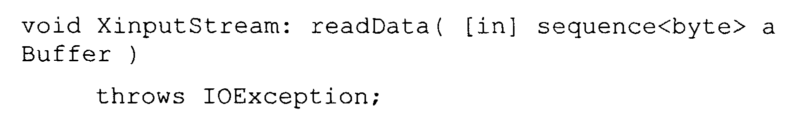

### Pa1 (Parser 1): parsing the structure of the original source data

The parser Pa1 parses the original source data stream of the original data file. For example, this can be an XML parser, which disassembles the original source data stream into XML tokens and contents. The XInputStream offered by PR1 and mentioned in c1.1 is used to access the original source data.

### c1.2: forwarding parsed data to filter A

The parser Pa1 uses a data sink interface, here for example an SAX interface XdocumentHandler as will be described in Table 1, to forward the parsed data to the filter A. This interface is generic and not dependent on the concrete document type of the original source data.

### Filter A-Z: filtering data

Multiple filter components A to Z can be chained to convert the original source data from the source data format into a format which is readable by the target component, therefore called target data format. Each of these filters provides a XDocumentHandler interface which allows to correspond with the next filter. For example, filter A provides a XDocumentHandler interface for communicating with filter B, while filter B provides a XDocumentHandler interface for dealing with filter C, etc.. Instead of XDocumentHandler interfaces similar interfaces may be used. Each filter can be, for example, "hard coded" or be implemented by XSLT transformations, using an XSL processor and XSL transformation descriptions. Each of these filter components can either transfer one format to another without changing the information itself, or can add or reduce the information contained in the data, for example, by using third data sources like databases or reduction rules. In the following, two examples for filtering are described:

### First Filtering Example: outline

One example for data filtering within a filter, like the above filters A to Z, is to strip all detail information from the information contained in the data. This means to forward, for example, only the headings within the text or the titles of diagrams, pictures or tables. This is useful, if the target component TC - above referred to as the computer software program supporting the second data format and running on the second computer system which requests the original source data - is able or programmed to exclusively present an outline of the original source data. This stripping of detailed data reduces the amount of data to be transferred in rt or rc1 to rc3.

### Second Filtering Example: layout stripping

Another example for data filtering is to remove all layout and formatting information from the data. This means to forward only the content itself. This may be useful, if the target component TC has no capabilities to display such layouts and formattings. Again, the transferred amount of data in rt or rcl to rc3 may be reduced.

### c1.3: forwarding data between filter components

Each filter component forwards the (partially) converted data to the next filter component by using the XDocumentHandler interface (or similar) of the succeeding filter component. The interfaces between the filter components in this chain are the same and independent from the concrete document type.

### c1.4: forwarding data from the last filter component to the printer component

The last filter component within the chain of filter components on the first computer system forwards the (completely) converted data to the printer Pr by the same interface, that means XDocumentHandler or similar. At this point the original source data has been completely converted from the first data format, i.e. the original source data format, into the intermediate data format. From this data format it shall be further converted to the second data format requested by the second computer system or the target component TC, i.e. the software program running on the second computer system which wants to access the original source data, respectively.

### Pr (Printer): converting the data into target data

This is a component which converts the internal representation of the converted data in the intermediate data format into a representation in the second data format which can be transferred to the second computer system, because the second data format is supported by this second computer system. For instance, an XML printer can be used. This component also offers the XDocumentHandler interface (or similar) to receive the data. Thus it has a document type independent interface. For instance, the printer Pr can create a text representation of an XML document, a PDF document or a document in the proprietary file format of the target component TC.

Referring to the above used terminology, in this example some or all filters of the chain of filters A to Z would be considered as the first partial adapter, while the printer Pr would be considered to be the second partial adapter. Whether more or less filters of the chain of filters would have to be considered to form the first partial adapter depends on the nature of the filters in the filter chain. If those filters exclusively serve the conversion of the data from the first into the second data format, then the full chain of filters could be regarded as the first partial adapter. However, if some filters in the chain of filters are dedicated to other tasks, for example, stripping information beyond the need specified by the target data format, these filters do not form part of the first partial adapter.

Further partial adapters may be used in the scope of the present invention. In this case, the one or more further partial adapters may convert the data between two or more intermediate data formats. This may be advantageous in certain instances, for example, if it is desired to have the converted data available in more than one intermediate data formats.

Continuing with the description of the steps carried out according to Fig. 6, the data now converted into the second data format, the target data format, is further processed:

### c1.5: writing the data in the target data format

The printer Pr uses, for example, a XOutputStream interface to write the data in the target data format to the protocol writer PW. A XOutputStream interface in an interface for sequentially writing data to a target component:

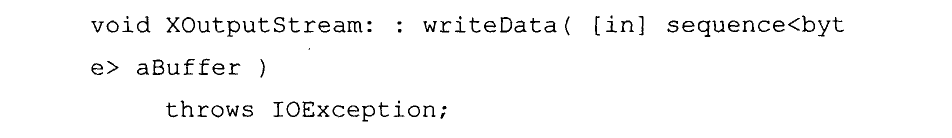

### PW (Protocol Writer): writing the target data

The protocol writer PW creates a data file from the obtained target data. Depending on the protocol used to create the target data file, a different protocol writer component PW is used. In this example, a file system writer is created which in turn creates the target file with the target data in the file system of the first computer system.

### t1.2: transferring the target data file to the file system of the first computer system

The protocol writer PW creates a file in the file system of the first computer system. By using other protocol writer components any protocol, like HTTP or FTP, can be used to create the file, even on a third computer system being accessible to the first computer system.

### D2: target file on first computer system

In this exemplary implementation of the invention a target file contains the target data on the first computer system.

### rt: remote transfer from first to second computer system

This is one of the four examples given in the following for the transfer of the converted data to the target system: The data file D2, which is locally stored in the first computer system, is transferred (copied) to the data file D2' on the second computer system.

### D2': target file on second computer system

In this implementation example of the invention this target file contains the target data on the second computer system.

### rc1 (remote connection 1): remote communication of protocol writer/reader

This is another example for the transfer of the converted data to the target system: A specialized protocol writer PW is used on the first computer system which directly communicates with a specialized protocol reader PR2 on the second computer system.

### rc2 (remote connection 2): remote calls to XOutputStream

This is yet another example for the transfer of the converted data to the target system: The printer Pr on the first computer system uses, for example, the interface XOutputStream of the parser Pa2 on the second computer system. In this case, simple data blocks can be transmitted. The advantage may be higher efficiency due to skipping the steps of file writing and reading.

### rc3 (remote connection 3): remote calls to XDocumentHandler

This is the fourth example for the transfer of the converted data to the target system: The last filter of the filter chain A to Z on the first computer system uses the interface XDocumentHandler of the importer component I of the target component to forward the data directly. The advantage may be higher efficiency due to skipping the printing and reparsing process steps.

### t2.1: transferring the target data into the reader component

Here, the target data file in the target data format can be accessed using direct file access on the second computer system.

### PR2: Protocol Reader 2

The protocol reader PR2 on the second computer system reads the target data file created by the process described above from an external representation into the software system. Specialized readers for different protocols may exist, i.e. for FILE, HTTP or FTP.

### c2.1: reading the target data

The parser Pa2 reads the data of the target file from the protocol reader PR2 using the interface XInputStream (or similar).

### Pa2 (Parser 2): parses the target file

The parser Pa2 parses the target data stream of the target file. For example, this can be an XML parser, which disassembles the target data stream into XML tokens and contents. The XInputStream offered by PR2 and mentioned in c2.1 is used to access the data. Alternatively, the input data could come directly from the printer Pr of the first computer system. In this case, Pr would provide an interface XInputStream (or similar). However, direct (unbuffered) polling data from remote computer systems may not be extremely efficient.

### c2.2: forwarding parsed data

The parser Pa2 uses a data sink interface, for example the SAX interface XDocumentHandler, to forward the parsed data to the importer I of the target component TC. The main point is that this interface is generic and not dependent on the concrete document type. Preferably, the same interface is used as in the chain of filter components A to Z.

### I (Importer): builds the internal representation of the target data

The importer of the target component TC receives the target data by an interface XDocumentHandler (or similar) and builds the internal representation of the target data, for example a target document. The importer I may be part of the target component TC. In the present example it is separated to give a clearer picture of the process.

### c2.3: building the internal representation of the target data

The importer I calls native functions of the target component TC to build the internal presentation of the target data within the target component TC. Here, unspecified interfaces, belonging to the target component TC can be used.

### TC (Target Component): for example viewer or editor

The target component TC which is used to process the target data can be, for example, a viewer, an editor or any other component which processes data. The target component TC has its own set of interfaces or other methods of receiving the target data. The target component TC may include the importer I, the parser Pa2 or even the protocol reader PR2. Preexistent software can be used on the second computer system, if the target component TC actually contains all of these components I, Pa2 and PR2.

### c2.4: displaying the target data

Optionally, the target component TC may use a display component to present the document in a rendered (or any other) form to the user of the second computer system.

### User Terminal:

The user terminal can be any output device of the second computer system including, for example, the display or the loudspeaker of a computer or mobile phone.

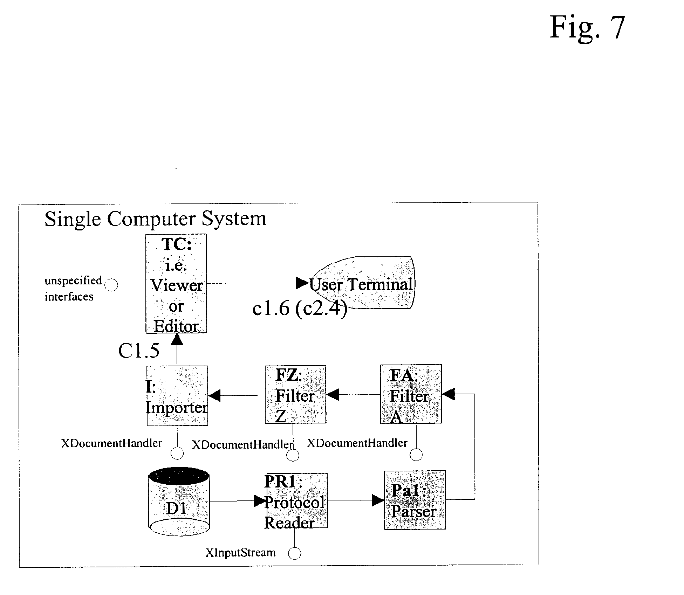

Alternatively to the depicted usage in two computer systems, this invention can be used on a single computer system too, as it is shown in Fig. 7. In this case, the target component TC and the importer component I are on the same computer system as is the filter chain A to Z. The components and the processes presented in Fig. 7 are identical with the corresponding components or processes of Fig. 6. Therefore, reference is made to the above explanations.

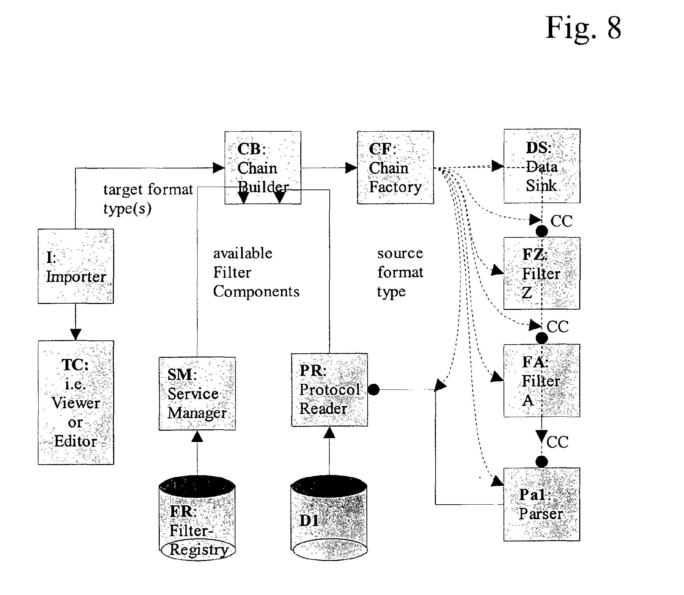

In the following, the process of building the chain of filter components A to Z is described along Fig. 8.

### CB: Chain Builder

The chain builder CB gets one or more data format types specified, for example, by a character string identifier like a MIME type or by a DTD identifier from the importer I of the target component TC. Herein, importer I and target component TC may be one single component. Additionally, the chain builder CB sets up a protocol reader PR to get the type of the original source data, specified by the same kind of identifier. Some protocols like HTTP provide a MIME type directly, for other protocols format detection components may be needed which read header information from the original source data file D1 itself. Using the list of filter components, which is available from the registry via the service manager SM, the chain builder CB finds the shortest possible chain of filter components which is suitable for the conversion of data from the first to the second data format.

### FR: Filter Registry

The filter registry FR consists of the name of the filter component, the source data format and the target data format specified, for example, by a MIME type or a DTD identifier, of the filter component. The entries may contain quality indicators (priorities).

### I: Importer

The importer I of the target component TC provides a list of all possible file formats, again specified, for example, by a MIME type or a DTD identifier. Quality indicators (priority) may be assigned to the data formats.

### CF: Chain Factory

The chain factory CF takes a descriptive representation of the filter chain, for example, a list of components specified by their service or implementation name. Based on this description the components are created using the service manager SM. The first component of the chain, the protocol reader PR, is already existent at this time. Finally, the chain factory CF creates the chain by connecting the newly created components together. This can be done by setting the SAX interface XDocumentHandler of each successor filter component to the predecessor's filter component.

### CC: Chain Connection

The chain connections CC are built by an interface which represents the basic structure of hierarchical documents. The preferred interface for these connections is the SAX interface XdocumentHandler. In the following Table 1 the methods of the SAX interface XDocumentHandler are described:

**Table 1:**

| characters | |
|---|---|
| Syntax | void characters([] string aChars); |
| Description | Receive notification of character data. |
| Arguments | string aChars : |

| endDocument | |
|---|---|
| Syntax | void endDocument(); |
| Description | Receive notification of the end of a document. |

| endElement | |
|---|---|
| Syntax | void endElement([] string aName ); |
| Description | Receive notification of the end of an element. |
| Arguments | string aName : |

| ignorableWhitespace | |
|---|---|
| Syntax | void ignorableWhitespace([] string a Whitespaces); |
| Description | Receive notification of ignorable whitespace in element content. |
| Arguments | string aWhitespaces : |

| processingInstruction | |
|---|---|
| Syntax | void processingInstruction([] string aTarget,[] string aData ); |
| Description | Receive notification of a processing instruction. |
| Arguments | string aTarget : string aData : |

| setDocumentLocator | |
|---|---|
| Syntax | void setDocumentLocator([] XLocator xLocator); |
| Description | Receive an object for locating the origin of SAX document events. |
| Arguments | XLocator xLocator: |

| startDocument | |
|---|---|
| Syntax | void startDocument(); |
| Description | Receive notification of the beginning of a document. |

| startElement | |
|---|---|
| Syntax | void startElement([] string aName,[] XAttributeList xAttribs ); |
| Description | Receive notification of the beginning of an element . |
| Arguments | string aName : XAttributeList xAttribs : |

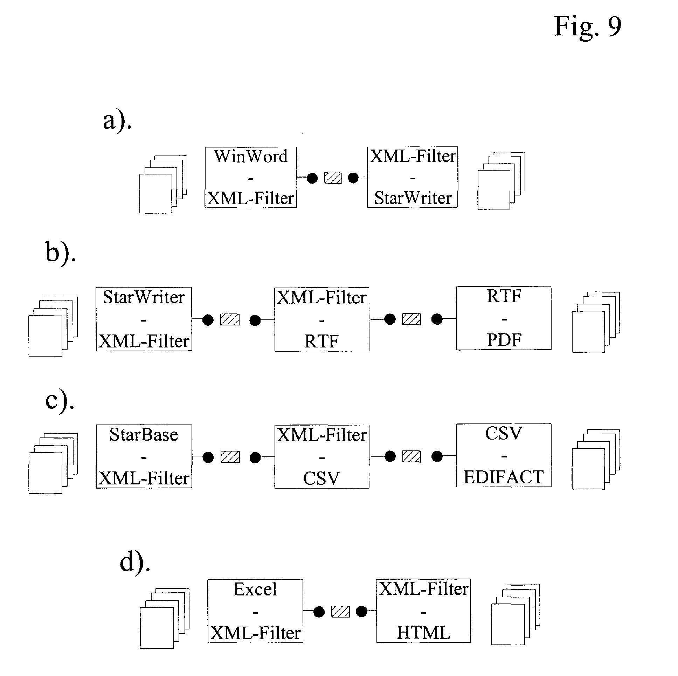

In Fig. 9 examples for converting documents from one data format into another data format are shown. In Fig. 9a a document in the WinWord format is requested in the StarWriter format. This converting may be achieved, for example, by employing one partial adapter for converting a WinWord document into a XML format and another partial adapter for converting the document in the XML format into the StarWriter format.

For most kind of documents there is one intermediate data format established. In the example in Fig. 9b the RTF format (Rich Text Format) is used as an intermediate data format to convert a text document in StarWriter format into a document in the PDF (Portable Document Format) format. For the conversion of a document from the StarWriter format into the PDF format three partial adapter may be employed. The first partial adapter may convert the StarWriter document into a XML format, the second partial adapter may convert the document in the XML format into the intermediate data format RTF and the third partial adapter may convert the RTF document into the PDF format. A similar situation is described in Fig. 9c. In this example, a XML format and the CSV (Comma Separated Value) format are employed as intermediate data formats in order to achieve proper converting from the StarBase format into the EDIFACT (Electronical Data Interchange) format.

In Fig. 9d it is shown that the first data format and the second data format do not need to be comparable. For example, if the converting of the document is requested only for viewing and not for editing the document, a conversion form the Excel format into the HTML format may be convenient. Such a conversion may only be possible in one direction.

It will be understood that the present invention is not limited to the examples given and explained in detail.

## Claims

1. A method for generating an adapter for converting data from a first data format to a second data format, comprising the steps of:
a) selecting from an adapter library a first partial adapter for converting said data from said first data format to an intermediate data format,
b) selecting from said adapter library a second partial adapter for converting said data from said intermediate data format to said second data format, and
c) combining said first partial adapter and said second partial adapter to generate said adapter for converting said data from said first data format to said second data format.

2. A method according to claim 1, wherein said adapter is generated in response to a command of a software program supporting said second data format to access said data being stored in said first data format.

3. A method according to claim 2, comprising the further step of selecting said second data format from at least two data formats supported by said software program.

4. A method according to claim 3, wherein said selection of said second data format is based on a selection scheme using at least one of the following criteria: storage space required by said data in each of said data formats supported by said software program, conversion time for said data from said first data format into each of said data formats supported by said software program, quality of said conversion.

5. A method of using an adapter generated according to any of the preceding claims for converting data from a first data format into a second data format.

6. A method for rendering accessible data stored in a first data format in a first computer system to a second computer system supporting a second data format, comprising the steps of:
a) receiving in said first computer system a request from said second computer system for said data,
b) receiving in said first computer system information about at least one data format supported by said second computer system,
c) selecting said second data format, if in step b) said first computer system was informed about more than one data format supported by said second computer system,
d) comparing in said first computer system said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data in said first computer system by means of said generated adapter from said first data format into said second data format,
g) transmitting said converted data from said first computer system to said second computer system.

7. A method for rendering accessible data stored in a first data format in a first computer system to a second computer system supporting a second data format, comprising the steps of:
a) receiving in said first computer system a request from said second computer system for said data,
b) informing said second computer system about said first data format of said requested data,
c) selecting said second data format, if said second computer system supports more than one data format,
d) comparing said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data by means of said generated adapter from said first data format into said second data format,
g) accessing said converted data by said second computer system.

8. A method for rendering accessible data stored in a first data format in a first computer system to a second computer system supporting a second data format, comprising the steps of:
a) receiving in said first computer system a request from said second computer system for said data,
b) transmitting said requested data from said first computer system to said second computer system,
c) so that said second computer system is able to select said second data format, if it supports more than one data format,
d) wherein said second computer system is able to compare said first data format with said second data format,
e) wherein said second computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,
f) wherein said second computer system is able to convert said data by means of said generated adapter from said first data format into said second data format.

9. A method for using a second computer system supporting a second data format for accessing data being stored in a first data format on a first computer system, comprising the following steps:
a) requesting from said first computer system said data,
b) informing said first computer system about at least one data format supported by said second computer system,
c) so that said first computer system is able to select said second data format, if it was informed about more than one data format supported by said second computer system,
d) wherein said first computer system is able to compare said first data format with said second data format,
e) wherein said first computer system is able to generate an adapter for converting said data from said first data format into said second data format, if said first data format is incompatible with said second data format, by operatively connecting a first partial adapter for the transformation of data from said first data format to an intermediate data format and a second partial adapter for the transformation of data from said intermediate data format to said second data format,
f) wherein said first computer system is able to convert said data by means of said generated adapter from said first data format into said second data format,
g) receiving said converted data from said first computer system in said second computer system.

10. A method for using a second computer system supporting a second data format for accessing data being stored in a first data format on a first computer system, comprising the following steps:
a) requesting from said first computer system said data,
b) receiving said requested data from said first computer system in said second computer system,
c) selecting said second data format, if said second computer system supports more than one data format,
d) comparing in said second computer system said first data format with said second data format,
e) generating an adapter for converting said data from said first data format into said second data format, if said first data format is incompatible with said second data format, by combining a first partial adapter for the transformation of data from said first data format to an intermediate data format and a second partial adapter for the transformation of data from said intermediate data format to said second data format,
f) converting said data in said second computer system by means of said generated adapter from said first data format into said second data format.

11. A method according to any of claims 6, 7 or 9, wherein in step b) said information about said at least one data format supported by said second computer system is provided indirectly by providing information about a software module on said second computer system destined to process said data.

12. A method according to any of claims 6 through 11, wherein said second data format is selected according to a selection scheme using at least one of the following criteria: storage space required by said data in each of said data formats supported by said second computer system, transmission time from said first computer system to said second computer system for said data in each of said data formats supported by said second computer system, conversion time for said data from said first data format into each of said data formats supported by said second computer system.

13. A method according to any of the preceding claims, wherein said intermediate data format is the format of an extensible markup language (XML).

14. A method according to any of the preceding claims, wherein at least one of said partial adapters is bi-directional.

15. A method according to any of the preceding claims, wherein at least one further partial adapter is used for converting said data from said intermediate data format into a further intermediate data format, wherein said first partial adapter is able to convert said data from said first data format into said intermediate data format and said second partial adapter is able to convert said data from said further intermediate data format into said second data format.

16. A computer program product for carrying out a method according to any of the preceding method claims on a computer system.

17. A data carrier for storing a computer program product for carrying out a method according to any of the preceding method claims on a computer system.

18. A method for using a computer system for carrying out a method according to any of the preceding method claims.

19. A stored data structure, comprising a set of partial adapters, wherein each partial adapter of said set of partial adapters is capable of converting data between a certain data format and an intermediate data format.

20. A stored data structure according to the preceding claim, wherein each partial adapter being capable of converting data between a first data format and said intermediate data format may be combined with each other partial adapter being capable of converting data between a second data format and said intermediate data format in order to produce an adapter being capable of converting data between said first data format and said second data format.
